# EUROPEAN PATENT APPLICATION

(11) **EP 4 354 714 A1**
(43) Date of publication of application: **17.04.2024**
(21) Application number: 22201645.3
(22) Date of filing: 14.10.2022
(51) Int. Cl.: H02K 15/12, H02K 3/32, H02K 15/02, H02K 3/34

(54) **PLASTIC DISTRIBUTION DEVICE**

(71) Applicant: MAHLE International GmbH, 70376 Stuttgart (DE)
(72) Inventor: MALE, Tim, Telford, TF3 2BX (GB); SEVER, Peter, 9000 Murska Sobota (SI)
(74) Representative: BRP Renaud & Partner mbB Rechtsanwälte Patentanwälte Steuerberater

(57) **Abstract**

The invention relates to a plastic distribution device (1) for coating a stator body (20) of a stator with electrical insulation made of a plastic (K). The distribution device (1) comprises a base body (2) having a first and a second end face (3a, 3b), in which at least two fluid channels (4) are provided, which are arranged at a distance from one another and through which the plastic (K) can flow and which extend from the first end face (3a) towards the second end face (3b). At least one fluid outlet (5) is formed in the base body (2) in the region of the second end face (3b), which fluid outlet fluidically connects at least two of the fluid channels (4) within the base body (2) and which is open at least in sections towards the second end face (3b).

## Description

The invention relates to a plastic distribution device for coating a stator body of a stator and to an arrangement comprising such a plastic distribution device. The invention further relates to a stator body for an electrical machine and a method for manufacturing such a stator body.

Stator bodies for electrical machines have stator apertures in which electrically energizable stator windings can be arranged. In order to prevent an electrical short-circuit of the stator windings with the stator material bounding the stator apertures - this is typically a metal and thus electrically conductive - the surfaces bounding the respective stator aperture are often coated with an electrical insulation of plastic. To coat the surfaces, liquid plastic is injected into the stator apertures. The plastic is distributed to the individual stator apertures by means of a plastic distribution device. Conventional distribution devices are equipped with a large number of fluid channels for this purpose, which can guide the liquid plastic into the individual stator apertures.

A disadvantage here is that the individual fluid channels can become clogged with residual plastic from the injection process that remains in the fluid channels from the spraying process. However, cleaning the plastic distribution device between the individual injection processes proves to be time-consuming and thus cost-intensive.

It is therefore an object of the present invention to provide an improved embodiment for a plastic distribution device which takes into account the problems explained above. In particular, an improved plastic distribution device is to be created which requires less frequent cleaning than conventional plastic distribution devices.

This object is solved by the objects of the independent patent claims. Preferred embodiments are the subject matter of the dependent patent claims.

Accordingly, the basic idea of the invention is to design a plastic distribution device for coating a stator body with plastic with a fluid outlet which connects two or more of the fluid channels present in the device to one another and is open towards the stator body to be coated. In this way, the number of individual fluid outlets required can be reduced, since a fluid outlet is no longer required for each individual fluid channel. This allows for improved operation of the device, as the risk of clogging individual fluid outlets is significantly reduced compared to conventional plastic distribution devices.

Specifically, a plastic distribution device according to the invention comprises a base body extending along an axial direction and having a first axial end face and a second axial end face axially opposite each other. In the base body, at least two fluid channels are arranged at a distance from one another, through which the plastic can flow, and which extend from the first axial end face towards the second axial end face. In addition, at least one fluid outlet is formed in the base body in the region of the second end face, which fluidically connects at least two of the fluid channels within the base body and is open at least in sections towards the second end face. This allows the plastic to be introduced via the open fluid outlet into the stator apertures of the stator body to be coated.

In a preferred embodiment, the at least one fluid outlet is formed by a recess formed on the second end face of the base body, which recess extends between at least two fluid channels. A fluid outlet formed in this way can be freed from cured artificial material in a simple and efficient manner in the course of a cleaning process.

According to an advantageous further development, a plurality of fluid channels is provided in the base body. In this further embodiment, two or more fluid outlets may also be present, wherein each fluid outlet present fluidically connects at least two, preferably more, of the fluid channels. In this further embodiment, the advantageous effects of the plastic distribution device according to the invention explained above are multiplied.

In another preferred further embodiment of the distribution device according to the invention, however, there can also be exactly one fluid outlet which communicates fluidically with all the fluid channels. This variant is particularly easy to manufacture and therefore inexpensive.

In an another preferred embodiment, the base body has a main axis extending along the axial direction. In this embodiment, the fluid channels are spaced apart from one another along a circumferential direction running around the main axis perpendicular to the axial direction. Furthermore, in this embodiment, the at least one fluid outlet extends completely around the main axis, preferably with an annular course. Due to its rotational symmetry, this embodiment proves to be particularly advantageous for coating stators with a cylindrical geometric shape.

According to an advantageous further embodiment, at least one radially inner and at least one radially outer fluid outlet is provided. In this further embodiment, the radially outer fluid outlet is arranged at a greater radial distance from the main axis than the radially inner fluid outlet. In this embodiment, a part of the fluid channels fluidically communicates with the radially inner fluid outlet, while a different part of the fluid channels communicates with the radially outer fluid outlet.

The invention further relates to an arrangement comprising a plastic distribution device according to one of the preceding claims presented above, such that the advantages thereof are transferred to the arrangement according to the invention. The arrangement according to the invention further comprises a stator body for an electric machine, in which a plurality of stator apertures is formed for receiving a coil winding. Each stator aperture extends along an axial direction of the stator body from a first axial end face to a second axial end face opposite the first axial end face. Here, the stator apertures are spaced apart along a circumferential direction of the stator body. According to the invention, the plastic distribution device and the stator body are arranged axially adjacent to each other so that each stator aperture of the stator body fluidically communicates with one of the fluid outlets of the plastic distribution device. Thus, the stator body can be efficiently coated with plastic by means of the plastic distribution device according to the invention.

In a preferred embodiment, the at least one fluid outlet is arranged axially between the plastic distribution device and the stator body.

Particularly preferably, the first end face of the stator body axially bounds the at least one fluid outlet. Thus, the plastic exiting the individual fluid channels into the common fluid outlet can be distributed via the fluid outlet to several or even all of the stator apertures.

Expediently, the first axial end face of the stator body and the second axial end face of the device may abut each other. In this way, unwanted leakage of plastic at the transition from the main body to the stator body will be avoided.

Particularly expediently, the main axis of the device, preferably the central longitudinal axis of the device, and a central longitudinal axis of the stator body may be arranged coaxially with respect to each other.

The invention further relates to a stator body for an electrical machine. The stator body according to the invention comprises a plurality of spaced stator apertures for receiving a stator winding of the stator. Each stator aperture extends along an axial direction of the stator body from a first axial end face to a second axial end face opposite the first axial end face. The stator apertures are spaced apart along a circumferential direction of the stator body, preferably equidistantly. The surfaces of the base body bounding the stator apertures are at least partially covered with an electrical insulation made of a plastic. In addition, the first end face of the stator body is also at least partially coated with the electrical insulation, this coating having an extension projecting axially from the end face. Said projection may form a sealing element, in particular a sealing lip.

Finally, the invention also relates to a method for coating a stator body for an electrical machine with electrical insulation made of a plastic using the plastic distribution device according to the invention presented above. The advantages of the plastic distribution device according to the invention are therefore transferred to the method according to the invention. The stator body to be coated extends along a central longitudinal axis. A plurality of stator apertures is formed in the stator body for receiving a coil winding. Each stator aperture extends along an axial direction of the stator body from a first axial end face to a second axial end face opposite the first axial end face. Further, the stator apertures are arranged sequentially and spaced apart along a circumferential direction of the stator body. The method according to the invention comprises two measures a) and b). According to measure a), an arrangement according to the invention presented above is provided with a plastic distribution device and with a stator according to the invention presented above. In measure b), an electrically insulating plastic is introduced into the stator apertures via the fluid channels provided in the plastic distribution device and via the at least one fluid outlet of the plastic distribution device, so that the plastic forms an electrical insulation on the surfaces of the stator body bounding the stator apertures.

Other important features and advantages of the invention will be apparent from the subclaims, from the drawings and from the accompanying figure description with reference to the drawings.

It is to be understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, schematically in each case:
- Fig. 1: an example of an arrangement according to the invention consisting of plastic distribution device and stator body in a longitudinal section,
- Fig. 2: a top view of the stator body of the arrangement of Fig. 1,
- Fig. 3: a top view the second end face of the base body of the plastic distribution device of Fig. 1,
- Fig. 4: the stator body of Figure 1 in the region of its first axial end face after the coating process has been completed.

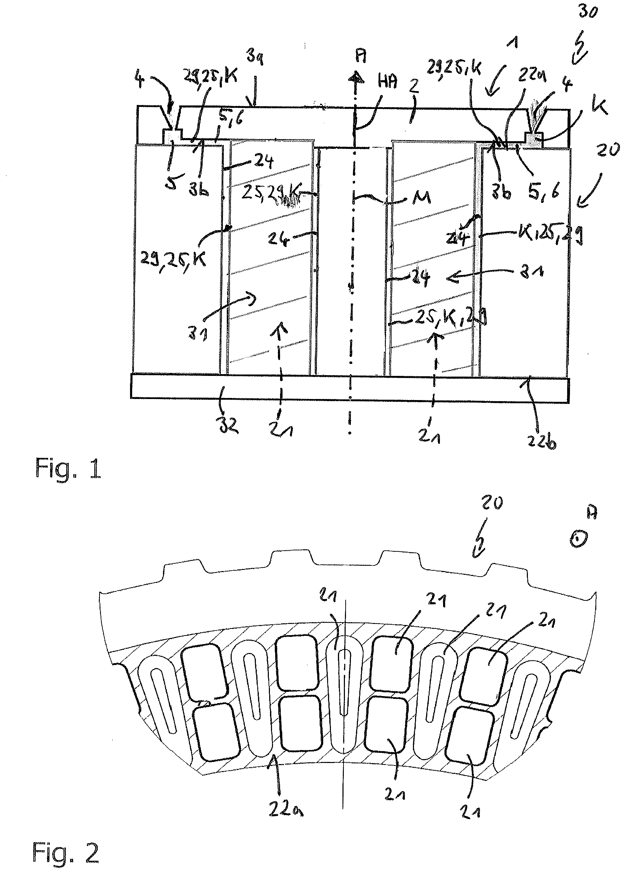

Figure 1 illustrates an example of an arrangement 30 according to the invention in a longitudinal section. The arrangement 1 comprises a plastic distribution device 1 according to the invention and a stator body 20 for an electric machine. The plastic distribution device 1 is used for coating the stator body 20 with an electrical insulation 25 made of a plastic K. For this purpose, the plastic distribution device 1 comprises a base body 2 having a first and a second end face 3a, 3b. The base body 2 has a main axis HA extending along an axial direction A. The main axis HA of the plastic distribution device 1 and a central longitudinal axis M of the stator body 20 are expediently arranged coaxially with one another.

Figure 2 shows, in a partial representation, a top view of the stator body 20 in the direction of view along the axial direction A of the stator body 20 extending along the central longitudinal axis M. A plurality of stator apertures 21 are formed in the stator body 20 for receiving a coil winding (not shown) of the stator. The individual stator apertures 21 are spaced apart from each other along a circumferential direction U, which is perpendicular to the axial direction A about the central longitudinal axis M.

According to Figure 1, each stator aperture 21 extends along an axial direction A of the stator body 20 from a first axial end face 22a to a second axial end face 22b of the stator body 20 opposite the first axial end face 22a (cf. Figure 1). Each stator aperture 21 thereby opens into both the first axial end face 22a and the second axial end face 22b. The arrangement 30 may have a cover 32 abutting the second end face 22b, which covers and thus closes the second end face 22b stator apertures 21.

For clarity, Figure 2 shows a top view of the stator body 20. Accordingly, the stator body 20 has a plurality of stator apertures 21 in which an electrically energizable stator winding can be received. Each stator aperture 21 extends along an axial direction A of the stator body 20 from a first axial end face 22a to a second axial end face opposite the first axial end face 22a. The stator apertures 21 are equidistantly spaced along a circumferential direction U of the stator body 20.

According to Figure 1, the plastic distribution device 1 and the stator body 20 are arranged axially adjacent to each other. In the base body 2 of the plastic distribution device 1, fluid channels 4 are provided which are arranged at a distance from one another and through which the plastic K can flow and which extend from the first end face 3a towards the second end face 3b.

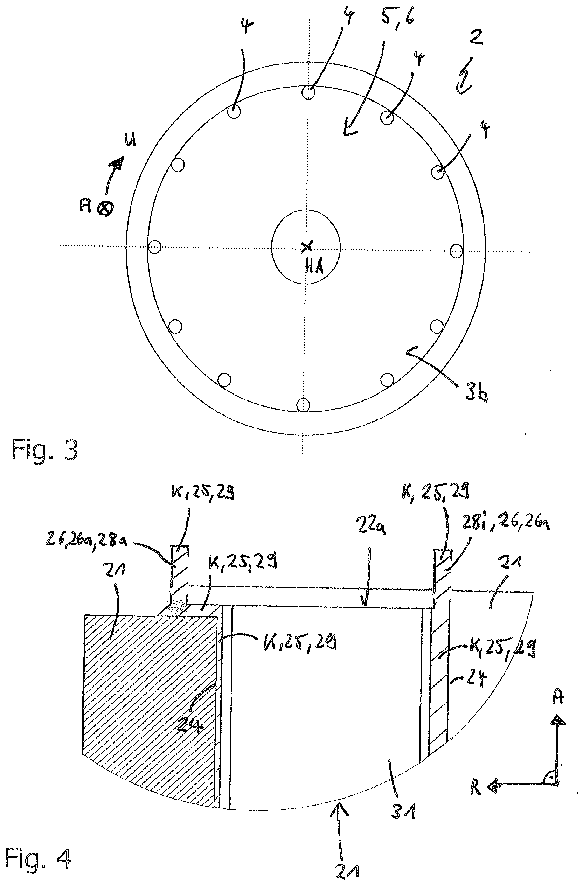

In the sectional view of Figure 1, two such fluid channels 4 can be seen as an example, which are radially opposite one another. As can be seen from Figure 3, which shows a top view of the second end face 3b of the base body 2 in a viewing direction along the axial direction A, the axially extending fluid channels 4 are arranged at a distance from one another along a circumferential direction U running around the main axis HA perpendicular to the axial direction A.

According to Figures 1 and 2, a fluid outlet 5 is also formed in the base body 2 in the region of the second end face 3b, which fluidically connects the fluid channels 4 within the base body 2 and is open towards the second end face 3b. The fluid outlet 5 is formed by a recess 6 with an annular geometry provided on the second end face 3b. Furthermore, according to Figure 2, the fluid outlet 5 has an annular shape and runs around the main axis HA in an annular manner along the circumferential direction U.

According to Figures 1 and 2, the individual fluid channels 4 each open into the common fluid outlet 5. Furthermore, each of the stator apertures 21 of the stator body 20 fluidically communicates with one of the fluid outlets 5 of the plastic distribution device 1.

Figure 3 shows a top view of the second end face 3b of the base body 2 along the axial direction A.

As illustrated by the figure 1, the fluid outlet 5 is axially arranged between the plastic distribution device 1 and the stator body 20. The first end face 22a of the stator body 20 thereby axially limits the fluid outlet 5. Here, the first axial end face 22a of the stator body 20 and the second axial end face 3b of the device 1 are in contact with each other. Thus, liquid plastic K introduced into the fluid outlet 5 via the fluid channels 4 can flow into the individual stator apertures 21.

Masking elements 31 can be introduced into the stator apertures 21 before the plastic K is injected and distributed by means of the plastic distribution device 1, which prevent the plastic K from completely filling the respective stator aperture 21 when it is injected into the stator apertures 21. By means of the appropriately dimensioned masking elements 31, it is thus ensured that only the surfaces of the stator body 20 bounding the stator apertures 21 are covered with the plastic K and form the desired electrical insulation 25.

Figure 4 shows a longitudinal section along the axial direction A of the stator body 20 according to the invention in the region of its first axial 22a end face after the coating process has been completed. In the case of the stator body 20 according to the invention, not only are the surfaces 24 of the stator body 20 bounding the stator apertures 21 coated with an electrical insulation 25 formed by the introduced plastic K, but additionally also the first end face 22a of the stator body 20 facing the plastic distribution device 1.

This covering or coating 29 has two projections projecting axially from the end face 22a, namely a radially inner projection 28i and a radially outer projection 28a. Both extensions 28i, 28a are of closed annular design and run along the circumferential direction U annularly, in particular circularly, around the central longitudinal axis M of the stator body 20.

In this case, the radially outer extension 28a is arranged at a greater radial distance from the central longitudinal axis M than the radially inner extension 28i with respect to a radial direction R, which extends away from the central longitudinal axis M perpendicularly both to the axial direction A and to the circumferential direction U. The radially outer extension 28a is arranged at a greater radial distance from the central longitudinal axis M than the radially inner extension 28i. Both extensions 82a, 28i, can each form a sealing element 26, in particular a sealing lip 26a.

In the following, the method according to the invention is explained by way of example. The method according to the invention comprises two measures a) and b). According to measure a), the arrangement 30 according to the invention is provided with the plastic distribution device 1 according to the invention and with the stator body 20 to be coated. According to measure b), an electrically insulating plastic K is introduced into the stator apertures 21 via the fluid channels 4 provided in the plastic distribution device 1 and via the fluid outlet 5 of the plastic distribution device 1, so that the plastic K forms an electrical insulation 25 on the surfaces 24 of the stator body 20 bounding the stator apertures 21. Said electrical insulation 25 of the plastic K comprises, which for forming a sealing element 26 or a sealing lip 26a, the two already explained projections 28a, 28i projecting axially from the first end face 22a of the stator body 20.

Masking elements 31 can be introduced into the individual stator apertures 21 before carrying out measure b), which prevent the plastic K from completely filling the respective stator aperture 21 when the plastic K is injected into the stator apertures 21. The appropriately dimensioned masking elements 31 thus ensure that only the surfaces of the stator body 20 bounding the stator apertures are covered with the plastic K and thus form the desired electrical insulation 25.

## Claims

1. Plastic distribution device (1) for coating a stator body (20) of a stator with an electrical insulation made of a plastic (K),
- having a base body (2) which has a first and a second end face (3a, 3b) and in which at least two fluid channels (4) are provided which are arranged at a distance from one another, through which the plastic (K) can flow and which extend, starting from the first end face (3a), towards the second end face (3b),
- wherein at least one fluid outlet (5) is formed in the base body (2) in the region of the second end face (3b), which fluid outlet fluidically connects at least two of the fluid channels (4) within the base body (2) and is open at least in sections towards the second end face (3b).

2. Plastic distribution device according to claim 1,
**characterized in that**
the at least one fluid outlet (5) is formed by a recess (6) provided on the second end face (3b), which recess (6) extends between the fluid channels (4).

3. Plastic distribution device according to claim 1 or 2,
**characterized in that**
- a plurality of fluid channels (4) is provided,
- at least two fluid outlets (5) are provided, which in each case fluidically connect at least two, preferably several, of the fluid channels (4) to one another.

4. Plastic distribution device according to claim 1 or 2,
**characterized in that**
exactly one fluid outlet (5) is provided, which fluidically communicates with all fluid channels (4).

5. Plastic distribution device according to one of the preceding claims, **characterized in that**
- the base body (2) has a main axis (HA) extending along the axial direction (A),
- the fluid passages (4) are spaced apart from one another along a circumferential direction (U) extending perpendicularly to the axial direction (A) about the main axis,
- the at least one fluid outlet (5) revolves completely around the main axis (HA), preferably with an annular course.

6. Plastic distribution device according to one of the preceding claims,
**characterized in that**
there is at least one radially inner and at least one radially outer fluid outlet (5, 5i, 5a), the radially outer fluid channel (5, 5a) being arranged at a greater radial distance (r) from the main axis (HA) than the radially inner fluid outlet (5, 5i).

7. Arrangement (30),
- comprising a stator body (20) for a stator of an electric machine, in which a plurality of stator apertures (21) for accommodating a coil winding are formed, wherein each stator aperture (21) extends along an axial direction of the stator body from a first axial end face (22a) to a second axial end face (22b) opposite the first axial end face (22a), and wherein the stator apertures (21) are spaced apart from one another, preferably equidistantly, along a circumferential direction (U) of the stator body (20),
- comprising a plastic distribution device (1) according to one of the preceding claims,
- wherein the device (21) and the stator body (20) are arranged axially adjacent to each other, so that each stator aperture (21) of the stator body (20) fluidically communicates with one of the existing fluid outlets (5) or with the fluid outlet (5) of the plastic distribution device (1).

8. Arrangement (30) according to claim 7,
**characterized in that**
the at least one fluid outlet (5) is arranged axially between the plastic distribution device (1) and the stator body (20).

9. Arrangement (30) according to claim 7 or 8,
**characterized in that**
the first end face (22a) of the stator body (20) axially bounds the at least one fluid outlet (5).

10. Arrangement (30) according to any one of claims 7 to 9,
**characterized in that**
the first axial end face (22a) of the stator body (20) abuts the second axial end face (3b) of the plastic distribution device (1).

11. Arrangement according to one of the claims 7 to 10,
**characterized in that**
the main axis (HA) of the plastic distribution device (1), preferably the central longitudinal axis (M) of the plastic distribution device (1), and a central longitudinal axis (M) of the stator body (20) are arranged coaxially to each other.

12. Stator body (20) for a stator of an electrical machine,
- with a plurality of stator apertures (21) arranged at a distance from one another for receiving a stator winding of the stator,
- wherein each stator aperture (21) extends along an axial direction (A) of the stator body (20) from a first axial end face (22a) to a second axial end face (22b) opposite the first axial end face (22a), and wherein the stator apertures (21) are arranged at a distance from one another, preferably equidistantly, along a circumferential direction (U) of the stator body (20),
- wherein the surfaces of the stator body (21) bounding the stator apertures (21) are at least partially covered with an electrical insulation (25) made of a plastic (K),
- the first end face (22a) also being at least partially coated with the electrical insulation (25), this coating (27) having an extension (28i, 28a) projecting axially from the first end face (22a) in order to form a sealing element (26), in particular a sealing lip (26a).

13. Stator body according to claim 12,
**characterized in that**
the at least one extension (28i, 28a) rotates along the circumferential direction (U) in an annular manner, in particular in a circular manner, about a central longitudinal axis (M) of the stator body (20).

14. Stator body (20) according to claim 13,
**characterized in that**
a radially inner (28i) and a radially outer extension (28a) are present, the radially outer extension (28a) being arranged at a greater radial distance from the central longitudinal axis (M) than the radially inner extension (28i).

15. Method of manufacturing a stator body (20), in particular for an electrical machine with electrical insulation, from a plastic (K),
comprising the following measures:
a) providing an assembly (30) according to any one of claims 1 to 11,
b) producing the stator body (20) by introducing an electrically insulating plastic into the stator apertures (21) on the end face via the fluid channels (4) present in the plastic distribution device (1) and via the at least one fluid outlet (5) of the plastic distribution device (1), so that the plastic (K) on the surfaces bounding the stator apertures (21) and at least in sections on the end face (22a) of the stator body (20) facing the plastic distribution device (1) form an electrical insulation which, for the formation of a sealing element (26), in particular a sealing lip (26a), has the two projections (28a, 28i) already explained, projecting axially from the end face of the stator body (20).
